# EUROPÄISCHE PATENTSCHRIFT

(11) **EP 0 796 294 B1**
(45) Veröffentlichungstag und Bekanntmachung des Hinweises auf die Patenterteilung: **15.09.1999**
(21) Anmeldenummer: 95940136.5
(22) Anmeldetag: 06.12.1995
(51) Int. Cl.: C08L 3/06, B65D 85/10

(54) **BIOABBAUBARE THERMOPLASTISCH VERFORMBARE MATERIALIEN UND VERPACKUNGEN DARAUS**
BIODEGRADABLE DEFORMABLE THERMOPLASTIC MATERIALS AND PACKAGES MADE THEREOF
MATERIAUX THERMOPLASTIQUES DEFORMABLES BIODEGRADABLES ET EMBALLAGES EN CES MATERIAUX

(30) Priorität: 07.12.1994 DE 4443539; 27.05.1995 DE 19519495
(43) Veröffentlichungstag der Anmeldung: 24.09.1997
(73) Patentinhaber: Buna Sow Leuna Olefinverbund GmbH, 06258 Schkopau (DE); R.J. Reynolds Tobacco GmbH, 50668 Köln (DE)
(72) Erfinder: VOIGT, Hans-Dieter, D-06130 Halle (DE); GEHRING, Manfred, D-54295 Trier (DE); ROM, Christel, D-06124 Halle (DE); WEIWAD, Dieter, D-06122 Halle (DE); RAPTHEL, Inno, D-06124 Halle (DE); REICHWALD, Kerstin, D-06114 Halle (DE); KAKUSCHKE, Rolf, D-06246 Bad Lauchstädt (DE)
(86) Internationale Anmeldenummer: DE9501732
(87) Internationale Veröffentlichungsnummer: WO9617888

(56) Entgegenhaltungen:
- WO-A-94/7953
- US-A- 4 137 280
- DATABASE WPI Week 9312 Derwent Publications Ltd., London, GB; AN 96870 & JP,A,05 039 412 (CALP KOGYO KK) , 19.Februar 1993

## Beschreibung

Die Erfindung bezieht sich auf thermoplastisch verformbare Materialien aus biologisch abbaubaren Polymerblends in Form von Granulaten, Formkörpern, Extrudaten, Folien u.s.w. auf der Basis eines Blends bestehend aus Stärkeestern, Polyalkylenglykolen und weiteren biologisch verträglichen Zusätzen, dessen Verwendung, sowie eine Verpackung aus den bioabbaubaren thermoplastisch verformbaren Materialien.

Mit wachsenden Umweltproblemen stellt sich auf dem Polymermarkt ein großer Bedarf für ökoverträgliche Materialien dar. Versuche, diesem Rechnung zu tragen, finden ihren Ausdruck in der Anwendung von Produkten aus fermentativ hergestellten Polyestern, Polyvinylalkoholen, Stärke und Stärkederivaten mit niedrigem Substitutionsgrad, Cellulose und Cellulosederivaten so wie Blends aus diesen und herkömmlichen Kunststoffen wie z.B. Polyethylen. Der Nachteil dieser Materialien besteht z.T. in der ungenügenden Haltbarkeit, den schlechteren mechanischen Eigenschaften und insbesondere bei Blends mit herkömmlichen Kunststoffen in der unvollständigen biologischen Abbaubarkeit. Mit dem Einsatz derivatisierter Stärke, insbesondere mit höherem Substitutionsgrad und entsprechenden biologisch abbaubaren Weichmachern modifiziert (DE 41 14 185), wurden thermoplastisch gut verarbeitbare Materialien, die sich für den Spritzguß, das Schmelzspinnen oder für die Folienherstellung eignen, erzielt. Bekanntermaßen verspröden aber diese Materialien wieder sehr schnell.

Nach der DE-OS 43 26 118 kann durch Modifizierung von Stärkeestern mit dem Substitutionsgrad < 3 vorzugsweise 1,8 bis 2,6 mittels Polyethylenglykol (PEG) diese Versprödung verhindert werden. Nach der DE-OS 44 18 678 ist es möglich, durch Zusatz von aliphatischen, gesättigten oder ungesättigten Dicarbonsäuren und/oder Oxidicarbonsäuren und/oder Oxitricarbonsäuren die Schmelzestabilisierung von Blends aus Stärkeestern mit dem Substitutionsgrad < 3 und Polyalkylenglykolen zu erhöhen sowie deren biologische Abbaubarkeit zu verbessern.
Ungenügend sind jedoch bei diesen Blends die Wasserstabilität, die mechanischen Eigenschaften, vor allem die Reißdehnung, Schlagzähigkeit sowie die Barriereeigenschaften insbesondere für Formmassen, die durch Spritzgießen, Tiefziehen, Schmelzspinnen und Extrusion insbesondere zu Folien verarbeitet werden sollen.

Verpackungen für Zigaretten und andere Tabakwaren sind in vielfältiger Ausfertigung aus unterschiedlichsten Materialien, wie z.B. Pouchbeutel, Dosen und Kappenschachteln aus Aluminium, Blech, Pappe oder Kunststoff bekannt. Verbreitetste Verpackung für Zigaretten ist die Kappenschachtel (Hinged- Lid-Packungen) nach DBP 34 14 214 (US-Patent 53 79 889). Bei dieser Packung wird der erforderliche Schutz des Füllgutes durch eine mehrlagige Kombination verschiedener Materialien erreicht. Sie besteht häufig aus einem Inneneinschlag aus kaschierter oder bedruckter Aluminiumfolie, einem meistens mit Kennzeichnungen bedruckten Karton- oder Papiereinschlag und einer äußeren geschlossenen Umhüllung aus thermisch schweißbarer Folie z.B. aus Polypropylen (DE-OS 30 27 448, DE-OS 2844 238). Andere Verpackungen für Zigaretten erreichen den erforderlichen Schutz des Füllgutes vor Deformation. Aroma- und Feuchtigkeitsverlust durch die Kombination anderer Werkstoffe wie Blech und Papier nach EP 087 483.

Es sind aber auch Verpackungen beschrieben worden, die ausschließlich aus Folien aus thermoplastischem Kunststoff bestehen (DE-OS 42 26 640).

Um die mechanischen Eigenschaften und die Gas- und Wasserdampfundurchlässigkeit der für die Zigarettenverpackung verwendeten Thermoplastfolien zu verbessern, werden biaxial streckorientierte gegebenenfalls metallisierte Kunststofffolien aus Polypropylen bzw. Polyalkylentherephthalat eingesetzt (DE-OS 36 32 376, EP 454 003, EP 317 818).

Die Nachteile aller dieser Lösungen sind, daß sie den Schutz des Füllgutes sowie die Wasserdampf- und Gasdichtigkeit nur ermöglichen, wenn Materialien ausgewählt werden, die mindestens aus einer Aluminiumfolie, Stanniol oder einer biaxial verstreckten Kunststoffolie bestehen. Die notwendigen Kennzeichnungen werden meistens auf eine in der Kombination verwendete Karton-, Blech- oder Papierumhüllung aufgedruckt. Diese kompliziert aufgebauten Verpackungen benötigen einen beträchtlichen Aufwand für ihre Herstellung sowie für das verwendete Verpackungsmaterial, um die Qualität der verpackten Waren zu erhalten und die Attraktivität der Verpackung zu gewährleisten.

Nach dem Gebrauch gelangen die Verpackungen gewöhnlich in den Abfall und tragen auf diese Weise zu den bestehenden Umweltproblemen bei. Auf Deponien und in der freien Natur unter Witterungseinflüssen verrotten sie nur sehr langsam oder gar nicht. Für ihre Wiederaufarbeitung in den üblichen Recyclingprozessen muß zunächst eine Materialtrennung erfolgen. Diese ist i. a. nur unvollständig möglich. Außerdem werden die Prozesse nachhaltig, z.B. durch Verunreinigung des Prozeßwassers gestört. Eine Wiederverwendung der Packungen scheidet aus lebensmittelrechtlichen Gründen aus.

Aufgabe der Erfindung ist es, die Merkmale der DE-OS 43 26 118 und DE-OS 44 18 687 durch eine Verbesserung der Wasserstabilität, der mechanischen Kennwerte sowie der Barriereeigenschaften der Blends vorteilhafter auszugestalten und Verpackungen für Waren unterschiedlicher Art zu entwickeln, die aus ein- oder mehrlagigen Folienschichten aus thermoplastischen Werkstoffen bestehen, die sich ohne hohen technischen Aufwand herstellen lassen, leicht sind, gute Barriereeigenschaften gegen Wasserdampf und Gase ohne zusätzliche Ausrüstung oder Nachbehandlung haben, bedruckbar sind, darüber hinaus aber vollständige biologische Abbaubarkeit besitzen, einem technischen Recyclingverfahren zugeführt werden können und bei Verbringung in übliche Recyclingverfahren nicht stören werden.
Die Aufgabe wird durch die in den Patentansprüchen 1 bis 15 dargestellte Erfindung gelöst.

Die erfindungsgemäßen Blends bestehen aus Stärkeestern. vorwiegend Stärkeacetat, mit einem Substitutionsgrad < 3, vorzugsweise von 1,8 - 2,6 und Polyalkylenglykolen (PAG) mit einer Molmasse von 200 - 1000 g/mol vorzugsweise von 200 bis 600 g/mol mit oder ohne Zusatz von gesättigten Dicarbonsäuren und/oder Oxidicarbonsäuren und/oder Oxitricarbonsäuren mit 2 bis 10 C-Atomen im Verhältnis 100 : 2 bis 1000 : 1 Stärkeester zu polyfunktioneller Carbonsäure, compoundiert mit aliphatischen Polycarbonaten und Weichmachern sowie üblichen Zusätzen. insbesondere Füllstoffen.

Die aliphatischen Polycarbonte sind Kohlensäureestergruppen enthaltende Polvmere der Formel 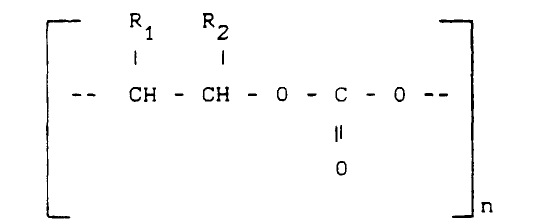 wobei R₁ und R₂ Wasserstoff oder geradkettige oder verzweigte C₁- bis C₄-Alkylgruppen sind und untereinander gleich oder unterschiedlich oder auch miteinander verbunden sein können und n = 250 - 10 000 vorzugsweise 350 - 3000 ist. Besonders günstig ist der Einsatz von Polyethylen- und Polypropylencarbonat. Aliphatische Polycarbonate können aber auch Polyalkylenco- oder Polyalkylenterpolymere sein.

Als Weichmacher kommen vorzugsweise biologisch verträgliche Verbindungen in Betracht: Polyethylenglykole, Mono- und Diester von Polyethylenglykolen mit C₁- bis C₁₀-Carbonsäuren, wie beispielsweise Triethylenglykoldiacetat, Glycerintriacetat sowie Zitronensäuretrialkylester. Desweiteren sind Ester der Phthalsäure mit C₁-C₁₀-n-Alkanolen wie z.B. Dimethylphthalat, Diethylphthalat oder Dibutylphthalat einsetzbar. Das Verhältnis Stärkeacetatblend zu aliphatischen Polycarbonaten kann 5 : 95 bis 95 : 5 vorzugsweise 30 : 70 bis 70 : 30 betragen. Der Anteil Additive bzw. Weichmacher beträgt 0 bis 30 % vorzugsweise 0 bis 15 %.

Durch diese Zusätze werden die Barriereeigenschaften und die Festigkeit der Blends für Verpackungsmaterialien nicht beeinträchtigt.

Für die thermoplastische Verarbeitung ist es besonders vorteilhaft, Stärkeacetat mit dem Substitutionsgrad < 3 mit Polyalkylenglykol unter Zusatz von Dicarbonsäuren und/oder Oxidicarbonsäuren und/oder Oxitricarbonsäuren vorzumischen, zu extrudieren und zu granulieren und dann das Granulat mit entsprechenden aliphatischen Polycarbonaten und Additiven zu verarbeiten.

Auf diesem Wege lassen sich thermoplastisch verarbeitbare Formmassen für alle üblichen Verarbeitungsverfahren, beispielsweise für Spritzguß, Tiefziehen. Schmelzextrusion u.s.w. erzeugen. Diese Formmassen sind vollständig biologisch abbaubar und weisen erhöhte Wasserstabilität, gute mechanische Eigenschaften, insbesondere bei Folien, erhöhte Reißdehnung sowie gute Barriereeigenschaften gegen Gas und Wasserdampf auf.

Zur Oberflächengestaltung für werbewirksame attraktive Bedruckungen können den Folien auch bis zu 35 %, bezogen auf die Gesamtmasse, geeignete Füllstoffe wie Kreide, Talkum, Anhydrit oder Kaolin beigemischt werden.

Die bevorzugte Konzentration der Füllstoffe beträgt 1 bis 30 Ma%.

Durch die guten Barriereeigenschaften der Folien gegen Wasserdampf und Gase, insbesondere Luft ohne Nachbehandlung durch biaxiale Streckung oder Metallbedampfung können insbesondere vorteilhaft einlagige Verpackungen gestaltet werden. Diese können gewöhnliche Verkaufsverpackungen, Umverpackungen, Transportverpackungen oder auch Nachfüllpackungen für ein System für wiederverwendbare Verkaufsverpackungen sein. Durch die einlagige Gestaltung der Verpackung wird hoher Aufwand an Kosten für die Herstellung und an Verpackungsmaterial gespart und dennoch der volle Schutz der Qualität des verpackten Gutes gewährleistet. Für Verpackungen, die besonderen mechanischen Beanspruchungen genügen müssen, können aber auch mehrlagige Folienzuschnitte eingesetzt werden, die je nach ihrer Lage im Verbund unterschiedlich zusammengesetzt sein können. Die biologische Abbaubarkeit bzw. die Kompostierbarkeit der beanspruchten Folienverpackungen ist ausgezeichnet, so daß nach mehrwöchiger Lagerung unter Rottebedingungen diese vollständig abgebaut sind.
Bei der Anwendung bekannter Verfahren für das Recycling der Artikel treten keine Störungen auf.

Die nachfolgenden Beispiele verdeutlichen die Vorzüge der erfindungsgemäßen Blends. Dazu wurden die festen Ausgangskomponenten der jeweiligen Mischung in einem Schnellmischer kurz vorgemischt. Anschließend wurden die weichmachenden flüssigen Komponenten zugesetzt und so ein pulverförmiges Dryblend hergestellt. Dieses wurde mittels eines Extruders zu Granulat verarbeitet. das anschließend entweder zu ISO-Stäben (80 mm x 10 mm x 4 mm) gespritzt oder zu Folien extrudiert wurde.

**Tabelle 1**

| | | | | | | | |
|---|---|---|---|---|---|---|---|
| enthält eine Übersicht über die zur Illustration der Ergebnisse ausgewählten Grundrezepturen: | | | | | | | |

| Beispiel | | Stac [Ma%] | PPC [Ma%) | PEC [Ma%] | PEG 400 [Ma%] | Oxalsäure [Ma%] | WM II [Ma%] |
|---|---|---|---|---|---|---|---|
| 1 | Vergleich | 83,0⁽³⁾ | - | - | 16,6 | 0,41 | - |
| 2 | gem. Erf. | 68,6⁽³⁾ | 13,7 | - | 17,2 | 0,48 | - |
| 3 | gem. Erf. | 45,3⁽³⁾ | - | 45,3 | 9,1, | 0,32 | - |
| 4 | gem. Erf. | 39,8⁽³⁾ | - | 39,8 | 16,0 | 0,40 | 4,0⁽¹⁾ |
| 5 | gem. Erf. | 66,4⁽⁴⁾ | 13,3 | - | 16,6 | 0,33 | 3,4⁽²⁾ |
| 6 | gem. Erf. | 30,7⁽⁴⁾ | 20,0 | 40,0 | 6,1 | 0,20 | 3,0⁽²⁾ |

| | | | | | | | |
|---|---|---|---|---|---|---|---|
| WM II ist ⁽¹⁾ Dimethylphthalat, | | | | | | | |
| ⁽²⁾ Triethylenglykoldiacetat. | | | | | | | |
| Der Acetylierungsgrad der Stärke betrug ⁽³⁾ 2,26 und | | | | | | | |
| ⁽⁴⁾ 2,24. Stac = Stärkeacetat PEC = Polyethylencarbonat PPC = Polypropylencarbonat PEG = Polyethylenglykol | | | | | | | |

Ein besonderer Vorteil der erfindungsgemäßen Blends ist, daß sich Füllstoffe gut einarbeiten lassen und neben dem preislichen Vorteil auch einzelne mechanische Kennwerte verbessert werden können.

**Tabelle 2**

| Grundrezepturen mit Füllstoffen | | | |
|---|---|---|---|
| Beispiel | Grundrezeptur entspricht Beispiel | Füllstoffzusatz | pph |
| 7 Vergleich | 1 | Kreide | 10 |
| | | TiO₂ | 0,5 |
| 8 gem. Erf. | 6 | Talkum | 11,3 |
| | | TiO₂ | 0,8 |
| 9 gem. Erf. | 6 | Talkum | 13,0 |
| | | TiO₂ | 0,5 |
| 10 gem. Erf. | 6 | Kreide | 12,9 |
| | | TiO₂ | 0,9 |

Von den Mischungen 1, 2, 3, 4 und 8 wurden ISO-Stäbe gefertigt und auf ihre mechanischen Kennwerte untersucht.

**Tabelle 3**

| Mechanische Kennwerte ISO-Stäbe | | | | | | | |
|---|---|---|---|---|---|---|---|
| Beispsiel | SBF kg/m² | GBF MPa | Biege-E-Modul MPa | Zugfestigk. MPa | Reißfest. MPa | Reißdehn. % | KDH N/mm² |
| 1 | 3,2 | 35,1 | 1455 | 19,9 | 19,6 | 1,3 | 64 |
| 2 | 8.5 | 35,5 | 1140 | 29,6 | 15,1 | 13 | 48 |
| 3 | 16,8 | 17,7 | 666 | 17,8 | 7,1 | 20,5 | 15 |
| 4 | * | 3,6 | 137 | 6,5 | 4,3 | 700 | 7 |
| 8 | 35,4 | 20,7 | 1157 | 24,8 | 8,9 | 107 | 75 |

| | | | | | | | |
|---|---|---|---|---|---|---|---|
| * 100 % nicht gebrochen, SBF Schlagbiegefestigkeit, GBF Grenzbiegefestigkeit, KDH Kugeldruckhärte 30" | | | | | | | |

Deutlich zu erkennen sind die weiten Bereiche, in denen die Kennwerte variiert werden können, wobei besonders Mischung 4 nicht für Spritzguß geeignet ist. Solche Mischungen sind für Folienanwendungen geeigneter.

**Tabelle 4**

| mechanische Kennwerte der Extrusionsfolien | | | | | | | | |
|---|---|---|---|---|---|---|---|---|
| Beisp. | Zugfestigkeit Dehnung | | | Reißfest. MPa | Richtung | | Permeation | |
| | Richtung | MPa | % | | Dehnung % | Dicke mm | H₂O Dampf g/m².d | Pentan g/m².d |
| 1 | 1 | 7,2 | 7,2 | 5,1 | 67,0 | 0,03 | 60,5 | 12,1 |
| | q | 5,3 | 4,2 | | | | | |
| 7 | 1 | 10,7 | 5,1 | 5,3 | 31,5 | 0,03 | 55,9 | 10,8 |
| | q | 8,7, | 4,0 | 6,0 | 5,1 | | | |
| 8 | 1 | 29,5 | 3,4 | 12,0 | 30,0 | 0,08 | 46,8 | 7,0 |
| | q | 22,0 | 2,5 | 16,4 | 3,7 | | | |
| 9 | 1 | 17,2 | 3,7 | 6,9 | 291,7 | 0,14 | 31,6 | 5,7 |
| | q | 15,9 | 3,6 | 6,5 | 28,6 | | | |
| 10 | 1 | 10,5 | 5,1 | 4,2 | 294,0 | 0,08 | 39,3 | 3,8 |
| | q | 6,0 | 18,4 | 3,3 | 535,1 | | | |

### Meßbedingungen:

Breite: 15 mm
Richtung relativ zu Folienabzug: 1 längs, q quer
Meßlänge: 50 mm
Prüfgeschwindigkeit: 100 mm/min
Vorkraft: 0,1 N

### Beispiele für die Anwendung als Verpackungsmaterialien:

Einlagige Zigarettenverpackungen wurden aus verschiedenen Folienzuschnitten hergestellt, deren Werkstoffzusammensetzung in Tabelle 5 dargestellt ist.

**Tabelle 5**

| Werkstoffzusammensetzungen | | | |
|---|---|---|---|
| | 1 | 2 | 3 |
| Stärkeacetat (Subst.grad 2,4) | 48 % | 30 % | 26,1 % |
| Polypropylencarbonat (Polymerisationsgrad 950) | - | 37.5 % | 34,8 % |
| Polvethylencarbonat (Polymersisationsgrad 1100) | 32 % | 12.5 % | 17,4 % |
| Weichmacher/Hilfsstoffe | 20 % Polyalkylenglykol | 20 % Polyethylenglykoldioctoat | 21,7 % Dioctylphthalat |

Dryblends der Mischungsbestandteile zu den Beispielen 1 bis 3 aus Tabelle 5 wurden auf einem Extruder zu Granulat verarbeitet und anschließend zu Folien extrudiert oder geblasen. In Tabelle 6 sind die mechanischen Meßwerte und die Permeationseigenschaften der Folien angegeben.

**Tabelle 6**

| mechanische Werte und Permeationseigenschaften | | | |
|---|---|---|---|
| Beispiel | 1 | 2 | 3 |
| Folienstärke (mm) | 0,04 | 0,08 | 0,060 |
| Zugfestigkeit (MPa) | 13,1 | 32,0 | 17,2 |
| Reißfestigkeit (MPa) | 4,8 | 12,1 | 6,9 |
| Reißdehnung (längs zum Folienabzug %) | 100,7 | 22,9 | 29,1 |
| Permeation v. H₂O Dampf (g/m²d) | 34 | 7,4 | 25,5 |
| Permeation v. Pentan g/m²d | 9,0 | 1,1 | 5,7 |
| Permeation v. Luft cm³/m²d | 15,8 | 6,4 | 9,8 |

Folienzuschnitte aus Werkstoffzusammensetzungen gemäß den Beispielen 1 bis 3 sind gut verschweißbar. Die gemessenen Festigkeitseigenschaften der Folien dokumentieren, daß diese hervorragend für Tabakwaren, insbesondere für Zigarettenverpackungen geeignet sind und den Packungsinhalt vor Beschädigungen beim Transport sowie bei der Lagerung und Handhabung schützen. Die gemessenen Permeationswerte sind ohne eine biaxiale Verstreckung der Folien erreicht worden. Zur Untersuchung der biologischen Abbaubarkeit wurden leere Verpackungshüllen der oben genannten Zusammensetzungen unter Rottebedingungen in einer Industriekompostanlage deponiert. Der Zustand der Verpackungen wurde wöchentlich kontrolliert und festgestellt, nach welcher Zeit die Morphologie des Folienzuschnittes nicht mehr erkennbar war. (Tabelle 7)

**Tabelle 7**

| Rottezeit (Wochen) | | | |
|---|---|---|---|
| Beispiel | 1 | 2 | 3 |
| Rottezeit (Wochen) | 8 | 14 | 12 |

Im folgenden werden Ausführungsbeispiele von Verpackungen, die aus dem erfindungsgemäßen Material hergestellt sind, am Beispiel von Zigarettenverpackungen unter Bezugnahme auf die Zeichnungen näher erläutert.

Es zeigen:
- Fig. 1: eine Zigarettenpackung mit einer inneren Kartonverpackung und einer Außenhülle, die aus der erfindungsgemäßen Folie besteht,
- Fig. 2: eine Zigarettenpackung aus einem einschichtigen Material,
- Fig. 3: eine Zigarettenpackung aus Kartonmaterial, das mit dem erfindungsgemäßen Material kaschiert ist, und
- Fig. 4: einen Querschnitt durch das Material der Packung von Fig.3.

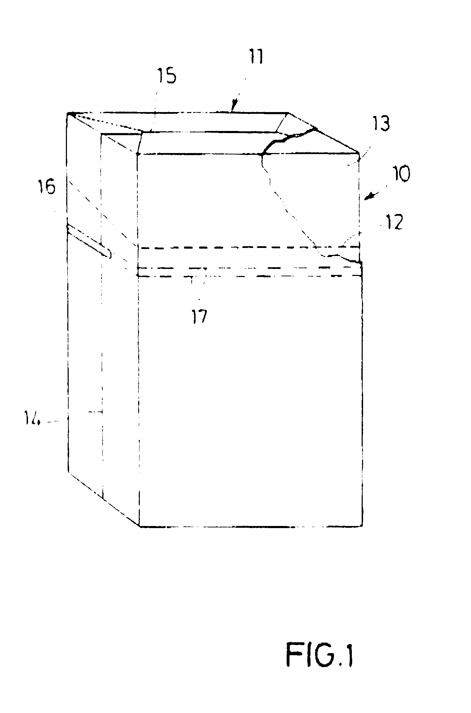

Bei dem Ausführungsbeispiel von Fig. 1 ist eine Innenverpackung 10 in Form einer üblichen Zigarettenschachtel aus Kartonmaterial vorgesehen. Das Kartonmaterial besteht aus zellulosehaltigem Stoff, insbesondere aus üblicher Pappe. Solches Material hat eine relativ hohe Dampfdurchlässigkeit. Die Innenverpackung 10 umschließt die in ihr enthaltenen Zigaretten vollständig. Sie hat eine übliche Trennaht 12 oder Schnittnaht, um den Deckel 13 abheben zu können, der nach Art einer oberen Kappe ausgebildet ist.

Die Innenverpackung 10 ist mit einer Außenverpackung 11 aus dem oben erläuterten erfindungsgemäßen Material umschlossen. Die Außenverpackung 11 besteht aus einer dünnen, vorzugsweise klarsichtigen Folie, die um die Innenverpackung 10 herumgewickelt ist und entlang der einen Schmalseite einen Einschlag 14 bildet. An den Stirnflächen ist die Außenverpackung 11 durch Faltung 15 verschlossen. Ferner ist an der Außenverpackung 11 ein umlaufendes Aufreißband 16 vorgesehen, das durch zwei Schwächungslinien 17 begrenzt ist. Nach dem Abreißen des Aufreißbandes 16 kann der obere Kappenteil der Außenverpackung 11 entfernt werden, so daß die Innenverpackung 10 zum Öffnen des Deckels freiliegt. Sämtliche Nähte und Faltungen der Außenverpackung 11 können dampfdicht versiegelt sein.

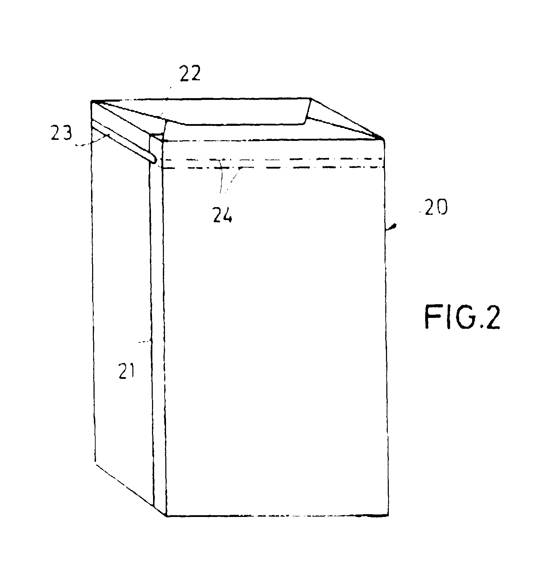

Bei dem Ausführungsbeispiel von Fig. 2 ist die Zigarettenverpackung insgesamt als Einstoffverpackung 20 ausgebildet, die aus dem erfindungsgemäßen Material besteht, das eine Stärke von mindestens 100 µm, insbesondere von 120 µm hat. Die Einstoffverpackung 20 ist auch hier von rechteckiger Form. Das Material der Verpackung überlappt sich an einer längslaufenden Schweißnaht 21, an der die Überlappungsstreifen miteinander versiegelt sind. An den Stirnflächen ist das Verpackungsmaterial durch Umfaltung 22 übereinandergelegt, wobei die übereinanderliegenden Lagen versiegelt sind. Ferner ist ein integriertes Aufreißband 23 vorgesehen, das durch Schwächungslinien 24 begrenzt ist und nahe der einen Stirnwand um die Verpackung umläuft.

Die Verpackung nach Fig. 2 besteht somit aus einem einlagigen dampfdichten Material, in dem die Zigaretten ohne weitere Innenverpackung enthalten sind. Nach dem Abreißen des Aufreißbandes 23 liegen die Enden der Zigaretten unmittelbar frei.

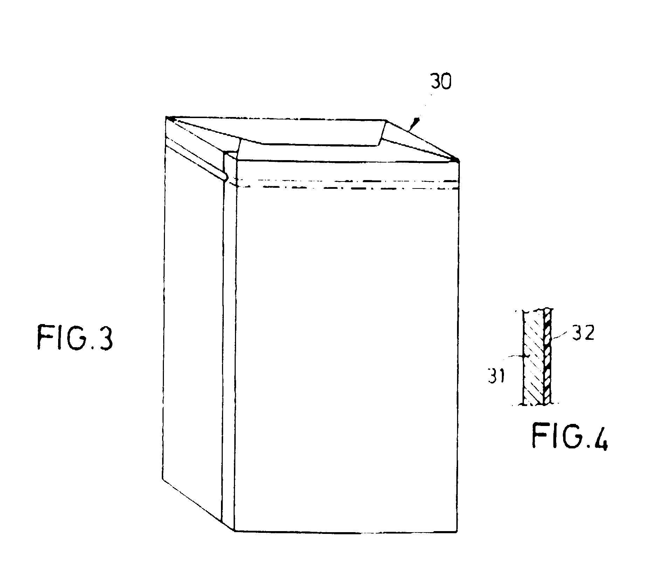

Bei dem Ausführungsbeispiel der Fign. 3 und 4 ist die Verpackung 30 ebenfalls eine Einstoffverpackung, die allerdings zweilagig ausgeführt ist und ein Kartonmaterial 31 aufweist, das mit der erfindungsgemäßen Folie 32 kaschiert ist. Die äußere Form der Verpackung 30 ist gleich der äußeren Form der Einstoffverpackung 20 des Ausführungsbeispiels von Fig. 2.

## Patentansprüche

1. Bioabbaubare thermoplastisch verformbare Materialien aus Blends von Stärkeestern auf der Basis von Stärke mit einem Amylopektingehalt von 20 bis 80 Masse-%, sowie einem Substitutionsgrad < 3 mit Polyalkylenglykolen oder Gemischen verschiedener Polyalkylenglykole mit Molmassen von 200 bis 2000 g/mol in einem Mischungsverhältnis Stärkeester zu Polyalkylenglykol von 10 : 1 bis 10 : 5 Masseteilen, wobei die Blends eine aliphatische gesättigte und/oder ungesättigte Dicarbonsäure und/oder eine Oxidicarbonsäure und/oder eine Oxitricarbonsäure mit 2 bis 10 C-Atomen in einem Mischungsverhältnis Blend zu Säure von 100 : 2 bis 1000 : 1 Masseteilen enthalten können, dadurch gekennzeichnet, daß die Blends mit aliphatischen Polycarbonaten der Formel 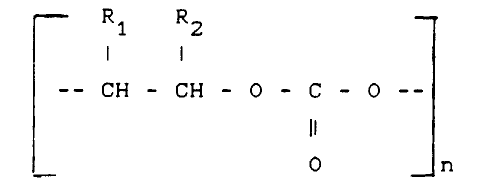 mit R₁, R₂=Wasserstoff oder geradkettige oder verzweigte Alkylgruppen mit 1 bis 4 C-Atomen und n = 250 bis 10 000, in einem Masse-Verhältnis von 95 : 5 bis 5 : 95 compoundiert sind, 0- 30 % bioabbaubare Weichmacher und 0 - 35 % Füllstoffe, bezogen auf die Gesamtmasse enthalten.

2. Bioabbaubare thermoplastisch verformbare Materialien nach Anspruch 1, dadurch gekennzeichnet, daß die aliphatischen Polycarbonate in einem Mischungsverhältnis von 30 : 70 bis 70 : 30 zum Blend enthalten sind.

3. Bioabbaubare thermoplastisch verformbare Materialien nach den Ansprüchen 1 und 2, dadurch gekennzeichnet, daß die Weichmacher Ester der Phthalsäure mit C₁ - C₁₀ - n-Alkanolen sind.

4. Bioabbaubare thermoplastisch verformbare Materialien nach den Ansprüchen 1 und 2, dadurch gekennzeichnet, daß die bioabbaubaren Weichmacher Polyethylenglykole, Mono- und Diester von Polyethylenglykolen mit C₁- bis C₁₀-Carbonsäuren insbesondere Triethylenglykoldiacetat, Glycerintriacetat sowie Zitronensäuretrialkylester sind.

5. Bioabbaubare thermoplastisch verformbare Materialien nach den Ansprüchen 1 bis 4 dadurch gekennzeichnet, daß das aliphatische Polycarbonat Polypropylencarbonat ist.

6. Bioabbaubare thermoplastisch verformbare Materialien nach den Ansprüchen 1 bis 4 dadurch gekennzeichnet, daß das aliphatische Polycarbonat Polyethylencarbonat ist.

7. Bioabbaubare thermoplastisch verformbare Materialien nach den Ansprüchen 1 bis 4 dadurch gekennzeichnet, daß das aliphatische Polycarbonat ein Polyalkylenco- oder Polyalkylenterpolymer ist.

8. Bioabbaubare thermoplastisch verformabre Materialien nach Anspruch 1 dadurch gekennzeichnet, daß als Stärkeester Stärkeacetat verwendet wird.

9. Bioabbaubare thermoplastisch verformbare Materialien nach den Ansprüchen 1 und 8 dadurch gekennzeichnet, daß der Stärkeester einen Substitutionsgrad zwischen 1,5 und 2,5 aufweist.

10. Bioabbaubare thermoplastisch verformbare Materialien nach den Ansprüchen 1 bis 7 dadurch gekennzeichnet, daß ein aliphatisches Polycarbonat mit einem Polymerisationsgrad 200 - 5000 verwendet wird.

11. Verwendung der bioabbaubaren thermoplastisch verformbaren Materialien nach den Ansprüchen 1 bis 10 als Verpackung für Tabakwaren, insbesondere für Zigaretten.

12. Verwendung der bioabbaubaren thermoplastisch verformbaren Materialien nach den Ansprüchen 1 bis 10 als Verpackung für Nahrungs- und Genußmittel, Kosmetika, Waschmittel, Papiertaschentücher oder Toilettenartikel.

13. Verpackungen aus bioabbaubaren thermoplastischem Material nach den Ansprüchen 1 bis 10 dadurch gekennzeichnet, daß das bioabbaubare thermoplastisch verformbare Material Folien, Beschichtungen oder Materialverbunde darstellt.

14. Verpackungen nach einem oder mehreren der Ansprüche 1 bis 13. dadurch gekennzeichnet, daß die Verpackungen einlagig ausgebildet sind.

15. Verpackungen nach einem oder mehreren der Ansprüche1 bis 14, nach dadurch gekennzeichnet, daß die Verpackungen Nachfüllpackungen, Verkaufsverpackungen, Umverpackungen, Transportverpackungen oder Bestandteile derselben darstellen.

## Claims

1. Biodegradable thermoplastic deformable materials comprising a blend of starch esters based on starch with an amylopectin content of from 20% to 80% by weight as well as a degree of substitution of < 3 with polyalkylene glycols or mixtures of different polyalkylene glycols having molecular weights of from 200 to 2,000 g/mol in a mixture ratio of starch esters to polyalkylene glycol of 10 : 1 to 10 : 5 parts by weight, whereby the blend could contain an aliphatic saturated and/or unsaturated dicarboxylic acid and/or an oxidicarboxylic acid with 2 to 10 C atoms in a mixture ratio of blend to acid of 100 : 2 to 1,000 : 1 parts by weight, wherein said blend is compounded with aliphatic polycarbonates of the formula 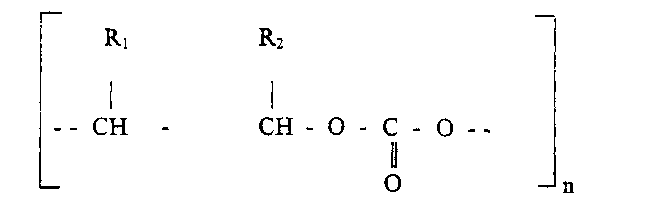 with R₁, R₂ = hydrogen or straight or branched chain alkyl groups with 1 to 4 C atoms and n equals 250 to 10,000 in a ratio of 95 : 5 to 5 : 95, 0 to 30% biodegradable plasticizers and 0 - 35% fillers based on the total mass.

2. Biodegradable thermoplastic deformable materials of claim 1, wherein aliphatic polycarbonates are contained in a mixture ratio of 30 : 70 to 70 : 30 to the blend.

3. Biodegradable thermoplastic deformable materials of claims 1 and 2, wherein the plasticizers are esters of phthalic acid with C₁ - C₁₀ n-alkanols.

4. Biodegradable thermoplastic deformable materials of claims 1 and 2, wherein the biodegradable platicizers are polyethylene glycols, mono- and diesters from polyethylene glycols with C₁ to C₁₀ carboxylic acids, especially triethylene glycol diacetate, glycerine triacetate as well as citric acid trialkyl ester.

5. Biodegradable thermoplastic deformable materials of claims 1 through 4, wherein the aliphatic polycarbonate is polypropylene carbonate.

6. Biodegradable thermoplastic deformable materials of claims 1 through 4, wherein the aliphatic polycarbonate is polyethylene carbonate.

7. Biodegradable thermoplastic deformable materials of claims 1 through 4, wherein aliphatic polycarbonate is a polyalkylene co- or a polyalkylene terpolymer.

8. Biodegradable thermoplastic deformable materials of claim 1, wherein starch acetate is used as the starch ester.

9. Biodegradable thermoplastic deformable materials of claims 1 and 8, wherein the starch ester has a degree of substitution between 1.5 and 2.5.

10. Biodegradable thermoplastic deformable materials of claims 1 through 7, wherein an aliphatic polycarbonate is used which has a degree of polymerisation of 200 - 5,000.

11. The use of biodegradable thermoplastic deformable materials of claims 1 through 10 as package for tobacco, especially for cigarettes.

12. The use of biodegradable thermoplastic deformable materials of claims 1 through 10 as package for food, cosmetics, detergent, paper tissues and toilet articles.

13. Packages made of biodegradable thermoplastic materials of claims 1 through 10 wherein said biodegradable thermoplastic deformable materials are foils, coatings or combined materials.

14. Packages of one or several claims of 1 through 13 wherein said packages are comprising of one layer.

15. Packages of one or several of claims 1 through 14 wherein the packages are refillable packages, sales packages, repackaging, transport packages or components of the same.

## Revendications

1. Matériaux thermoplastiques déformables biodégradables à partir de blends d'esters d'amidon à la base d'amidon ayant une teneur d'amylopectine de 20 à 80 % en poids, et un degré de substitution < 3 avec les glycols de polyalkylène ou des mélanges de divers glycols de polyalkylène aux masses moléculaires de 200 à 2000 g/mol dans un rapport de mélange d'ester d'amidon par rapport au glycol de polyalkylène de 10 : 1 à 10 : 5 en parts de poids, les blends pouvant contenir un acide dicarbonique et/ ou oxydicarbonique et/ou oxytricarbonique aliphatique saturé et/ ou non saturé avec des atomes de 2 C jusqu'à 10 C dans un rapport de mélange de blend par rapport à l'acide de 100: 2 jusqu'à 1000: 1 parts en poids, caractérisés par le fait que les blends avec des polycarbonates de la formule 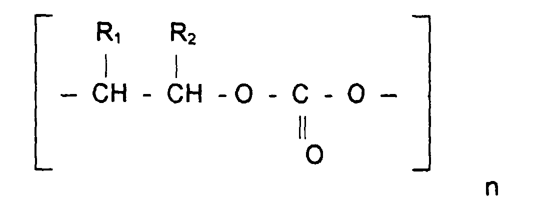 sont compoundés avec R₁, R₂ = hydrogène ou groupes alkyle en chaînes linéaires ou ramifiées avec 1 à 4 atomes de C et n = 250 à 10 000 dans un rapport de poids de 95 : 5 jusqu'à 5 : 95, et contiennent de 0 à 30 % de plastifiants biodégradables et 0 à 35 % de charge rapportés au poids total.

2. Matériaux thermoplastiques déformables biodégradables selon la spécification 1, caractérisés par le fait que les polycarbonates aliphatiques y sont contenus dans un rapport de mélange de 30 : 70 jusqu'à 70 : 30 envers le blend.

3. Matériaux thermoplastiques déformables biodégradables selon les spécifications 1 et 2, caractérisés par le fait que les plastifiants sont les esters de l'acide phtalique avec des n-alcanols de C₁ - C₁₀.

4. Matériaux thermoplastiques déformables biodégradables selon les spécifications 1 et 2, caractérisés par le fait que les plastifiants biodégradables sont des glycols de polyéthylène, des monoesters et des diesters de glycols de polyéthylène avec des acides carboniques de C₁ à C₁₀ en particulier le diacétate de glycol de triéthyléne, le triacétate de glycérine et l'ester trialkylique de l'acide citrique.

5. Matériaux thermoplastiques déformables biodégradables selon les spécifications de 1 à 4, caractérisés par le fait que le polycarbonate aliphatique est le carbonate de polypropylène.

6. Matériaux thermoplastiques déformables biodégradables selon les spécifications de 1 à 4, caractérisés par le fait que le polycarbonate aliphatique est le carbonate de polyéthylène.

7. Matériaux thermoplastiques déformables biodégradables selon les spécifications de 1 à 4, caractérisés par le fait que le polycarbonate aliphatique est un copolymère de polyalkylène ou un terpolymère de polyalkylène.

8. Matériaux thermoplastiques déformables biodégradables selon la spécification 1, caractérisés par le fait que l'ester d'amidon utilisé est de l'acétate d'amidon.

9. Matériaux thermoplastiques déformables biodégradables selon les spécifications de 1 à 8, caractérisés par le fait que l'ester d'amidon présente un degré de substitution se situant entre 1,5 et 2,5.

10. Matériaux thermoplastiques déformables biodégradables selon les spécifications de 1 à 7, caractérisés par le fait qu'un polycarbonate aliphatique présentant un degré de polymérisation de 200 à 5000 est utilisé.

11. Matériaux thermoplastiques déformables biodégradables selon les spécifications de 1 à 10 utilisés comme emballages pour les tabacs, en particuliers pour les cigarettes.

12. Matériaux thermoplastiques déformables biodégradables selon les spécifications de 1 à 10 utilisés comme emballages pour les produits alimentaires et de consommation de luxe, les produits de beauté, les détergents, les mouchoirs en papiers et articles de toilette.

13. Emballages en matériau thermoplastique biodégradable selon les spécifications de 1 à 10 caractérisés par le fait que le matériau thermoplastique déformable biodégradable est présenté sous forme de feuilles, de revêtements ou de matériaux composés.

14. Emballages selon l'une ou plusieurs des spécifications de 1 à 13 caractérisés par le fait que les emballages ne forment qu'une simple couche.

15. Emballages selon l'une ou plusieurs des spécifications de 1 à 14 caractérisés par le fait que les emballages se présentent comme emballages, emballages rechargeables, emballages de vente, réemballages ou parties de ceux-ci.
